# EUROPEAN PATENT APPLICATION

(11) **EP 1 792 720 A2**
(43) Date of publication of application: **06.06.2007**
(21) Application number: 06024155.1
(22) Date of filing: 21.11.2006
(51) Int. Cl.: B29D 30/52, B60C 19/08

(54) **Pneumatic tire and method of manufacturing same**

(30) Priority: 02.12.2005 JP 2005350004
(71) Applicant: Sumitomo Rubber Industries, Ltd., Kobe-shi, Hyogo-ken (JP)
(72) Inventor: Nagahara, Naoya c/o Sumitomo Rubber Ind., Ltd., Chuo-ku, Kobe-shi Hyogo-ken (JP)
(74) Representative: Manitz, Finsterwald & Partner GbR

(57) **Abstract**

A plurality of conductive rubber members (20) each having an electric resistance value lower than that of a tread rubber body (11a) is embedded in the tread rubber body (11a) from a peripheral surface of the tread rubber body (11a) at predetermined intervals in a circumferential direction of a pneumatic tire (10). An outer end surface (20a) of each of the conductive rubber members (20) in the radial direction of the pneumatic tire (10) is exposed on a peripheral surface (11c) of a tread part (11). An inner end (20b) of each of the conductive rubber members (20) in the radial direction is brought into contact with a steel belt layer (15) formed at an inward position of the tread part (11) in the radial direction or with a conductive rubber layer (11b) formed between the tread rubber body (11a) and the steel belt layer (15).

## Description

### Field of the Invention

The present invention relates to a pneumatic tire and a method of manufacturing the pneumatic tire and more particularly to a pneumatic tire capable of discharging a static electricity in a car body to a road surface and a method of manufacturing the pneumatic tire.

### Description of the Related Art

Conventionally the pneumatic tire for use in the car body is demanded to have various performances, particularly excellent wet gripping, cornering, high-speed, and wear-resistant performances. To allow the tire to have these performances, it is known that a rubber material such as silicone rubber containing silicic acid at a high ratio is used to compose the tread part of the pneumatic tire.

Because the above-described rubber material has a high electric resistance, it is incapable of discharging the static electricity in the car body to the road surface. Thus the static electricity accumulates in the car body, thereby causing a car radio to have a radio wave trouble.

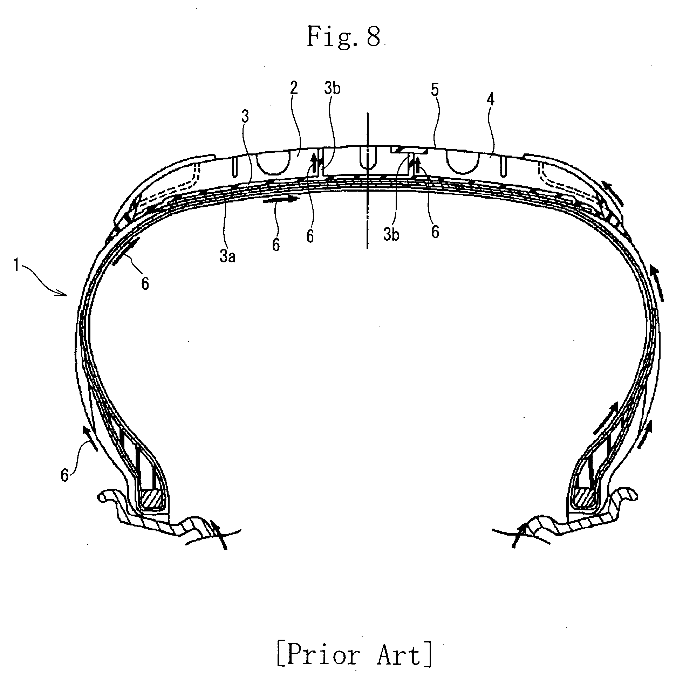

To overcome the above-described problem, as disclosed in Japanese Patent Application Laid-Open No.9-71112 (patent document 1), the present applicant proposed the pneumatic tire 1 capable of discharging the static electricity in the car body to the road surface. As shown in Fig. 8, in the pneumatic tire 1, the tread part 2 is provided with the conductive member 3 composed of the conductive rubber material. The conductive layer 3a of the conductive member 3 is disposed inward from the tread rubber body 4 in the radial direction thereof. The penetration portion 3b is projected radially outward from the conductive layer 3a. The tip of the penetration portion 3b is exposed on the tread surface 5 which is the outer surface of the tread part 2. The tip of the penetration portion 3b contacts the road surface. Thereby the electrostatic charge generated in the car body is transmitted, as shown with the arrow mark 6 of Fig. 8 and discharged to the road surface. Thereby it is possible to prevent the static electricity from accumulating in the car body and a car radio from having a radio wave trouble.

In the tire disclosed in the patent document 1, the tread part 2 is formed by extrusion-molding with an extruder in a tire-manufacturing work. Thus in providing the tread part 2 with the conductive member 3 serving as the discharging measure, the tread rubber body 4 and the conductive member 3 both forming the tread part 2 need to be extruded by the extruder from one cap. Thus another extruder for forming the conductive member 3 serving as the discharging measure needs to be equipped. Therefore the tire-manufacturing cost becomes high.

By forming the conductive member 3 serving as the discharging measure by the extrusion molding, the penetration portion 3b of the conductive member 3 exposed on the tread surface 5 is extended continuously in the circumferential direction of the tire. Because the wear amount of the tread rubber body 4 and that of the conductive member 3 are different from each other, there is a difference in the degree of wear therebetween as a result of traveling of a car. As described above, the tip of the penetration portion 3b is exposed on the tread surface 5 continuously in the circumferential direction thereof. Thus a circumferentially continuous wear line is easily formed, which makes the tire look poor.

Patent document 1: Japanese Patent Application Laid-Open No.9-71112

### SUMMARY OF THE INVENTION

The present invention has been made in view of the above-described problems. Therefore it is an object of the present invention to provide a pneumatic tire on which a conductive rubber member serving as a discharging measure can be easily mounted without using an extruder for a discharging use and which is capable of efficiently discharging a static electricity inside a car body to a road surface without generating a continuous wear line in a circumferential direction thereof; and a method of manufacturing the pneumatic tire.

To solve the above-described problems, the present invention provides a pneumatic tire in which a plurality of conductive rubber members each having an electric resistance value lower than that of a tread rubber body is embedded in a radial direction of the pneumatic tire in the tread rubber body from a peripheral surface of the tread rubber body at predetermined intervals in a circumferential direction of the pneumatic tire; an outer end surface of each of the conductive rubber members in the radial direction of the pneumatic tire is exposed on a peripheral surface of a tread part; an inner end of each of the conductive rubber members in the radial direction of the pneumatic tire is brought into contact with a belt formed at an inward position of the tread part in the radial direction of the pneumatic tire or with a conductive rubber layer formed between the tread rubber body and the belt; and the conductive rubber members are so shaped that the conductive rubber members can be wedged into the tread rubber body from the peripheral surface thereof.

The conductive rubber members are wedge-like or conic so that they can be wedged into the tread part from the peripheral surface of the tread rubber body at predetermined intervals in the circumferential direction of the tire. The conductive rubber member is not columnar. That is, the sectional area of the conductive rubber member is not constant in the axial direction thereof, but the conductive rubber member is conic. That is, the conductive rubber member becomes gradually smaller from the outer end thereof to the inner end thereof in the radial direction of the pneumatic tire. More specifically, when the conically shaped conductive rubber member is wedged into the tread part, the tip thereof is crushed and becomes truncated cone-shaped. It is preferable that the conductive rubber member is conic, but the conductive rubber member may be pyramidal.

Because the conductive rubber member is conic, it can be wedged easily into the tread rubber body from the peripheral surface thereof, and the inner end of the conductive rubber member in the radial direction thereof can be securely brought into contact with the belt disposed at the inward position of the tread part or with the conductive rubber layer disposed between the tread rubber body and the belt.

Because the outer end surface of the conductive rubber member exposed on the tread surface has a required area, the outer end surface thereof can be securely brought into contact with the road surface. Hence the static electricity of a car body can be discharged to the road surface.

It is preferable that the diameter of the outer end surface of the conductive rubber member exposed on the tread surface is set to not more than 10mm. This is because even though the diameter of the outer end surface of the conductive rubber member is set to more than 10mm, it is impossible to make the electric resistance thereof smaller, and the rolling resistance of the tire is adversely affected. It is preferable that the diameter of the outer end surface of the conductive rubber member is set to not less than 1mm. The length of the conductive rubber member is varied in correspondence, to the dimension of the tire in the radial direction thereof.

It is preferable that the conductive rubber members are arranged on the tread surface at intervals 30mm to 100mm in the circumferential direction of the tire. This is because if the conductive rubber members are arranged at intervals more than 100mm, there is a fear that at least one conductive rubber member does not contact the road surface when a car is traveling. On the other hand, if the conductive rubber members are arranged at intervals not more than 30mm, the tread surface has a plurality of the conductive rubber members that contact the road surface within the range of the contact between the tread surface and the road surface. One conductive rubber member is enough to discharge the static electricity of the car body to the road surface.

The conductive rubber members may be formed in a row in the circumferential direction of the tire. But a plurality of rows of the conductive rubber members may be formed in the axial direction of the tire in dependence on the size thereof. When the conductive rubber members is formed in a plurality of rows on the tread surface in the axial direction of the tire, it is preferable to arrange them zigzag. In this case, the tire is capable of flexibly coping with concavities and convexities of the road surface.

It is preferable that at least one conductive rubber member is disposed in regions sandwiching the equator (the circumferential line disposed at the center of the tire in its axial direction) in such a manner that the outer end surface of the conductive rubber member is exposed on the peripheral surface of the tread part and that at least one conductive rubber member is brought into contact with the road surface. It is particularly preferable to dispose the conductive rubber members in the circumferential direction of the tire along the equator.

By disposing the conductive rubber member in the equatorial region, it is possible to securely bring at least one of the conductive rubber members formed on the tread part into contact with the road surface during traveling and stop of the car and successively discharge the static electricity of the car body to the road surface.

As described above, according to the present invention, by exposing the conductive rubber members on the tread surface at predetermined intervals in the circumferential direction of the tire, the exposed surfaces of the conductive rubber members contact the road surface. Consequently the static electricity of the car body is discharged to the road surface through the car body→the carcass→the belt (→the conductive rubber layer)→the conductive rubber member. Thereby it is possible to prevent the static electricity from accumulating in the car body and hence prevent a car radio from having a radio wave trouble.

The conductive rubber members of the present invention are disposed on the tread surface in the circumferential direction of the tire not by extending them continuously but by disposing them at the predetermined intervals, namely, by dotting the conductive rubber members on the tread surface. Therefore even though the wear amount of the tread rubber body and that of the conductive rubber members are different from each other owing to the difference between the wear resistance of the tread rubber body and that of the conductive rubber members, it is possible to prevent the conductive rubber members from forming a linear line on the tread surface, unlike the pneumatic tire disclosed in the patent document 1 in which the conductive rubber members are extended continuously on the tread surface in the circumferential direction of the tire and thus form the linear line. Therefore the conductive rubber members do not make the tire look poor.

In the pneumatic tire disclosed in the patent document 1, the tread rubber body and the conductive rubber member need to be extruded by the extruder from one cap. On the other hand, in the present invention, the conductive rubber member can be formed by the method of wedging it into the tread rubber body from the outer surface thereof. Therefore of all tire-manufacturing steps, it is unnecessary to install the equipment for providing the tread part with the conductive rubber member in the step of forming the tread rubber by extrusion molding. Thereby it is possible to reduce the tire-manufacturing cost.

A volume specific resistance of the conductive rubber member is set smaller than that of the tread rubber body. The volume specific resistance of the tread rubber body is set to not less than 1.0×10⁸ Ω·cm. The volume specific resistance of the conductive rubber member is set to less than 1.0×10⁸ Ω·cm and preferably not more than 1.0×10⁷ Ω·cm.

The method of measuring the volume specific resistance of the tread rubber body and that of the conductive rubber member is described later. To allow the conductive rubber member to have a high conductivity, the conductive rubber member is formed by molding a rubber component to which a conductive agent composed of an electronic conductive agent consisting of carbon or metal powder or/and an ionic conductive agent is added.

A rim is mounted on the pneumatic tire to which an internal pressure of 200 kPa is applied; the pneumatic tire is mounted on a conductive tire-mounting shaft; a conductive metal plate is brought into contact with a surface of a tread part on which the conductive rubber members are exposed; and an electric resistance-measuring instrument is interposed between the tire-mounting shaft and the conductive metal plate; and a voltage is applied to the tire-mounting shaft to obtain the electric resistance value of the pneumatic tire of 1.0×10⁶ Ω to 1.0×10⁸ Ω and preferably 6.0×10⁶ Ω to 8.9×10⁷ Ω when the electric resistance value thereof is measured in accordance with a JATMA requirement.

It is preferable to make the content by percentage of carbon larger than those of other conductivity-imparting means.

The tread rubber body also contains the carbon as a reinforcing component thereof. The content of the carbon contained in the conductive rubber member is set larger than that of the carbon contained in the tread rubber body.

In detail, it is favorable that the conductive rubber member contains the carbon at not less than 15 mass percentage nor more than 30 mass percentage. If the conductive rubber member contains the carbon at less than 15 mass percentage, the electric resistance value of the conductive rubber member does not become sufficiently small and thus the static electricity of the car body cannot be sufficiently discharged to the road surface. It is more favorable that the conductive rubber member contains the carbon at not less than 17 mass percentage and most favorable that it contains the carbon at not less than 20 mass percentage.

The conductive rubber member contains the carbon at not more than 30 mass percentage. It is favorable that the conductive rubber member contains the carbon at not more than 25 mass percentage and more favorable that it contains the carbon at not more than 20 mass percentage. If the conductive rubber member contains more than 30 mass percentage of the carbon, the rolling resistance of the tire becomes large. As a result, the fuel cost becomes high and the hardness of the rubber becomes too high.

The tread rubber body contains the carbon at not more than 20 mass percentage. It is favorable that the tread rubber body contains the carbon not more than 17 mass percentage and more favorable that it contains the carbon not more than 15 mass percentage. If the tread rubber body contains the carbon at more than 20 mass percentage, the rolling resistance of the tire becomes large and the fuel cost becomes high. If the tread rubber body contains the carbon at not more than 5 mass percentage, the tread rubber body is insufficiently reinforced and hence readily wears.

When the electric resistance value of the tread rubber body and that of the conductive rubber member are changed by changing the content of the carbon contained therein, it is preferable to compose the tread rubber body and the conductive rubber member of the same rubber component to prevent the generation of the difference between the wear amount of the tread rubber body and that of the conductive rubber member.

As the rubber component, it is possible to use natural rubber, styrene butadiene rubber, butadiene rubber, synthetic isoprene rubber, nitrile rubber, and chloroprene rubber. These rubbers are used singly or in combination of two or more thereof.

To allow the conductive rubber member to have a high conductivity, the conductive rubber member may contain other conductive fillers instead of the carbon or contain the conductive fillers and the carbon in combination. As the conductive fillers, it is possible to list Ag, Ni, Cu, Zn, Fe, Al, stainless steel, titanium, and barium sulfate.

Instead of electronic fillers such as the conductive fillers and the carbon, the conductive rubber member may contain ionic-conductive agents consisting of organic metal salts containing F⁻ group, SO₄ group.

A conductive rubber component may be added to the rubber component of the conductive rubber member.

The present invention provides a method of manufacturing the pneumatic tire. In this method, the conductive rubber member is wedged into the tread rubber body from the peripheral surface thereof before a vulcanizing step is performed. Thereafter the tread rubber body is vulcanized.

According to the above-described manufacturing method, by merely wedging the conductive rubber member into the tread rubber body of the tire, it is possible to embed the conductive rubber member for discharging the static electricity of the car body to the road surface. Thereby of all the tire-manufacturing steps, it is unnecessary to form the tread rubber body and the conductive rubber member simultaneously in the step of forming the tread rubber by extrusion molding. Thereby it is unnecessary to install another extruder for providing the tread part with the conductive rubber member and hence reduce the cost of the manufacturing equipment.

As described above, according to the present invention, the conductive rubber members of the present invention are dotted on the tread surface of the tire in the circumferential direction of the tire at the predetermined intervals, with the conductive rubber members exposed on the peripheral surface of the tread part to bring the exposed surfaces of the conductive rubber members into contact with the road surface. Thereby it is possible to discharge the static electricity of the car body to the road surface and prevent the static electricity from accumulating in the car body. Therefore it is possible to prevent the car radio from having the radio wave trouble. In addition, the conductive rubber members having a wear amount different from that of the tread rubber body are disposed on the tread surface not continuously in the circumferential direction of the tire, but spaced at the predetermined intervals. Therefore it is possible to prevent the conductive rubber members from forming a linear line, even though there is a difference in the wear amount between the tread rubber body and the conductive rubber members. Thus the tire does not look poor.

The conductive rubber members of the present invention are not extended continuously on the tread surface in the circumferential direction of the tire but dotted. Therefore in the present invention, the conductive rubber members can be wedged into the tread part from the outer surface thereof. Thus unlike the conductive rubber member disclosed in the patent document 1, in the present invention, it is unnecessary to form the tread rubber body and the conductive rubber member by extrusion molding from one cap by the extruder. Therefore it is unnecessary to install the equipment for providing the tread part with the conductive rubber member. Thereby it is possible to reduce the tire-manufacturing cost.

### BRIEF DESCRIPTION OF THE DRAWINGS

Fig. 1 is a sectional view showing a pneumatic tire of an embodiment of the present invention.
Fig. 2A is an enlarged sectional view showing main portions of a tread part of the pneumatic tire shown in Fig. 1.
Fig. 2B is a perspective view showing a conductive rubber member.
Fig. 3 shows a tread surface.
Fig. 4 shows a method of manufacturing the pneumatic tire.
Fig. 5 shows a modification of the embodiment.
Fig. 6 shows a rubber specimen.
Fig. 7 shows a method of measuring an electric resistance value of the pneumatic tire.
Fig. 8 shows a conventional pneumatic tire.

### DETAILED DESCRIPTION OF THE PREFERRED EMBODIMENTS

The pneumatic tire of the embodiments of the present invention will be described below with reference to the drawings.

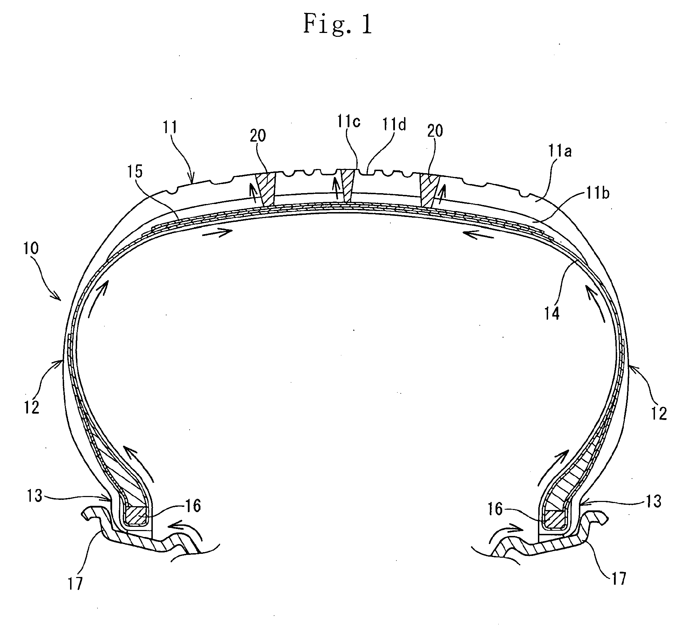

Figs. 1 through 4 show an embodiment of a pneumatic radial tire 10 (hereinafter often referred to as merely tire 10) of the present invention for a car. Fig. 1 is a sectional view, taken along the meridian line, showing the pneumatic radial tire 10 including a shaft thereof.

As shown in Fig. 1, the tire 10 has a tread part 11, a pair of sidewall parts 12 extended from both ends of the tread part 11 toward an inner end of the tire 10 in the radial direction thereof, and a bead part 13 fitted in a rim 17 of a tire wheel at an inner end of the sidewall part 12 in the radial direction of the tire 10. The tire 10 further includes a carcass 14 extended from the tread part 11 to the bead part 13 through the sidewall part 12 and folded back around a bead core 16 of the bead part 13. An end of the carcass 14 is fixed to a body portion thereof. The tire 10 further includes a steel belt layer 15 disposed in the inside of the tread part 11 and outward from the carcass 14 in the radial direction of the tire 10.

The tread part 11 is constructed of a tread rubber body 11a disposed at the outer side thereof in the radial direction thereof, a conductive rubber layer 11b formed between the tread rubber body 11a and the steel belt layer 15, and conductive rubber members 20 wedged from the tread rubber body 11a to the conductive rubber layer 11b.

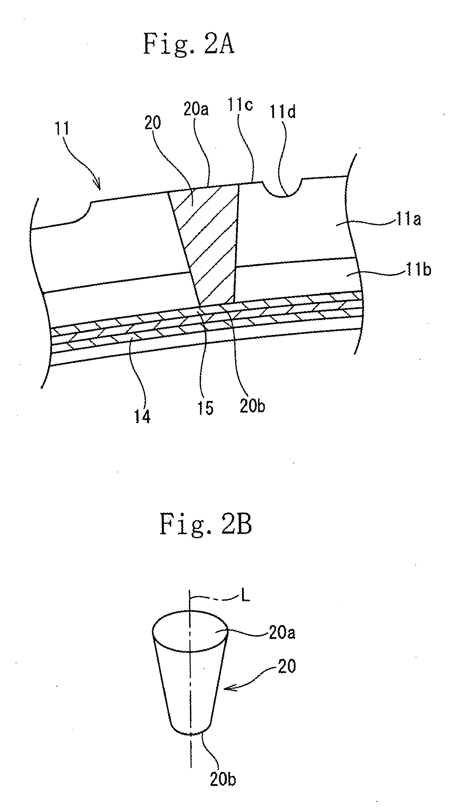

As shown in Fig. 2B, each of the conductive rubber members 20 is truncated cone-shaped. The axis of the truncated cone extends in the radial direction of the tire. Outer end surfaces 20a of the conductive rubber members 20 in the radial direction of the tire are exposed at portions, of the tread surface 11c, where grooves 11d of the tread surface 11c which contacts the road surface are not formed. An inner end 20b of each conductive rubber member 20 in the radial direction of the tire contacts the steel belt layer 15 formed in the inside of the tread part 11 in the radial direction of the tire.

That is, the conductive rubber member 20 penetrates through the tread rubber body 11a of the tread part 11 and the conductive rubber layer 11b thereof in the range from the tread surface 11c to the steel belt layer 15.

The outer end surface 20a of the conductive rubber member 20 is perfectly circular and has a diameter of 5mm. The inner end surface 20b of the conductive rubber member 20 has a diameter of 2mm.

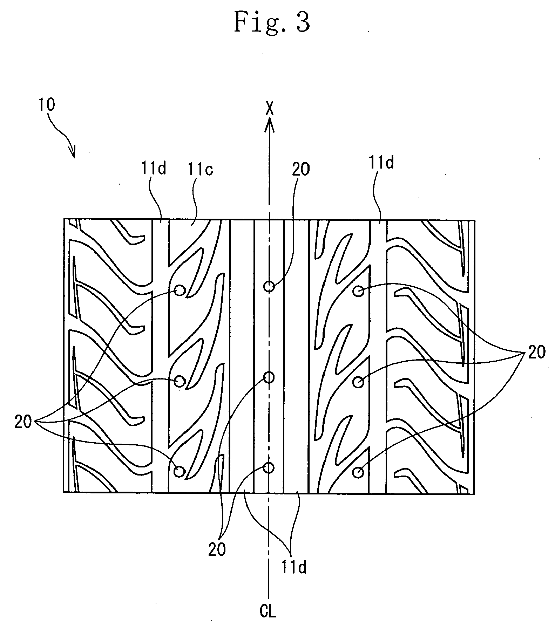

As shown in Figs. 1 and 3, three conductive rubber members 20 are arranged on the tread part 11 in the axial direction of the tire at certain intervals, with the central conductive rubber member 20 disposed on a tire equator CL positioned at the center of the tread surface 11c in the axial direction of the tire and with the other two conductive rubber members 20 disposed at both sides of the equator CL by spacing the other two conductive rubber members 20 at a certain interval from the equator CL.

As shown in Fig. 3, the conductive rubber members 20 are spaced at intervals of 30mm to 100mm in the circumferential direction of the tire.

The conductive rubber members 20 are all disposed in a region, of the tread part 11, which contacts the road surface during traveling of a car.

The conductive rubber member 20 contains carbon as a conductivity-imparting agent at not less than 15 mass percentage nor more than 30 mass percentage. The volume specific resistance of the conductive rubber member 20 formed by extrusion molding is set to less than 1.0×10⁸ Ω·cm and preferably 1.0×10⁷ Ω·cm.

The rubber component of the conductive rubber member 20 is similar to that of the tread rubber body 11a.

The tread rubber body 11a of the tread part 11 contains 10 mass percentage of carbon as a reinforcing material per 100 mass percentage of the rubber component. Thereby the volume specific resistance of the tread rubber body 11a is not less than 1.0×10⁸ Ω·cm. That is, the volume specific resistance of the conductive rubber member 20 is set much lower than that of the tread rubber body 11a.

The conductive rubber layer 11b disposed inward from the tread rubber body 11a consists of the same rubber component as that of the tread rubber body 11a. But the conductive rubber layer 11b contains the carbon more than the tread rubber body 11a to set the volume specific resistance of the conductive rubber layer 11b to 1.0×10⁷ Ω·cm which is less than 1.0×10⁸ Ω·cm. The peripheral surface of the conductive rubber member 20 at the inner side thereof contacts the conductive rubber layer 11b. Thereby the conductive rubber member 20 becomes conductive. Further the inner end surface 20b of the conductive rubber member 20 contacts the steel belt layer 15. Thereby the conductive rubber member 20 becomes conductive.

As the rubber component of the tread rubber body 11a, the conductive rubber layer 11b, and the conductive rubber member 20, natural rubber, styrene butadiene rubber, and the like are used.

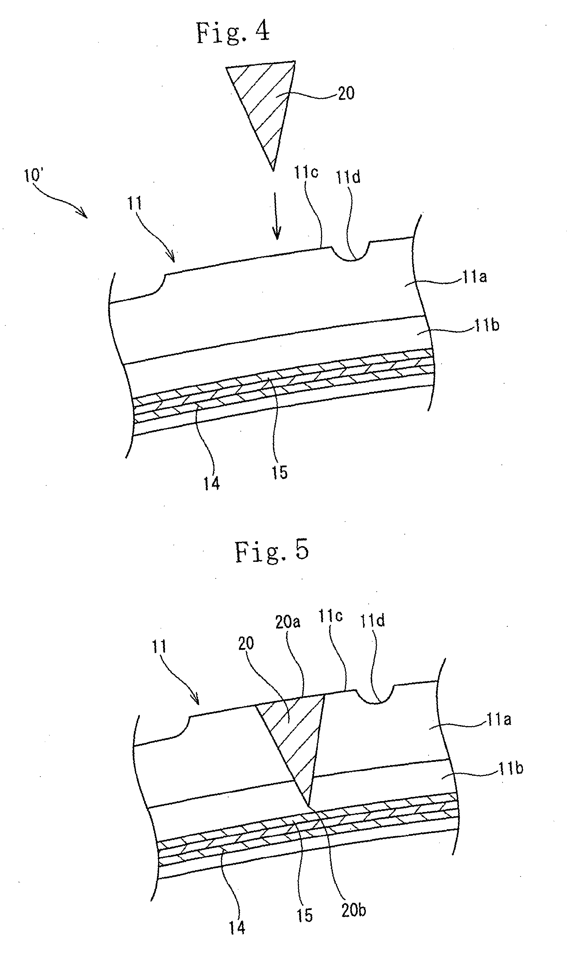

As shown in Fig. 4, in a step of manufacturing a raw tire 10' before it is vulcanized, the conic conductive rubber member 20 is wedged into the tread part 11 from the outer surface thereof until a pointed tip of the conic conductive rubber member 20 thereof contacts the steel belt layer 15 and becomes truncated cone-shaped by being crushed, as shown in Fig. 2. Thereafter the tire 10' is vulcanized to obtain the tire 10 having a tread pattern formed on the tread surface 11c thereof.

According to the above-described construction, the conductive rubber members 20 wedged into the tread part 11 are exposed at the tread surface 11c. Thereby the exposed surfaces of the conductive rubber members 20 contact the road surface. Thereby as shown with the arrow mark of Fig. 1, the static electricity of the car body is discharged to the road surface through the car body→the carcass 14→the steel belt layer 15→ the conductive rubber layer 11b→the conductive rubber member 20. Thereby it is possible to prevent the static electricity from accumulating and hence prevent the car radio from having the radio wave trouble.

Because the conductive rubber members 20 are formed not by continuously extending it in the circumferential direction X of the tire but by spacing them at certain intervals in the circumferential direction X of the tire thereof, the conductive rubber members 20 can be mounted on the tread rubber body 11a by wedging them thereinto. Therefore of all the steps of manufacturing the tire, it is unnecessary to install equipment for providing the tread part 11 with the conductive rubber member 20 in the step of forming the tread rubber by extrusion molding. Thus the tire can be manufactured at a low cost.

Fig. 5 shows a modification of the above-described embodiment.

In the tire 10 of the modification, the conic conductive rubber member 20 is extended in the radial direction of the tire thereof, with the outer end 20a of the conductive rubber member 20 in the radial direction of the tire exposed at a portion of the tread surface 11c, and with the inner end 20b of the conductive rubber member 20 in the radial direction of the tire wedged into the conductive rubber layer 11b. The tire 10 of the modification is different from the above-described embodiment in that the inner end 20b of the conductive rubber member 20 does not contact the steel belt layer 15.

The above-described construction also allows the static electricity of the car body to be discharged to the road surface through the car body→carcass 14→the steel belt layer 15→the conductive rubber layer 11b→the conductive rubber member 20. Thereby it is possible to prevent the static electricity from accumulating in the car body and hence prevent the car radio from having the radio wave trouble.

The modification has the same construction, operation, and effect as those of the above-described embodiment. Thus the same parts of the modification as those of the embodiment are denoted by the same reference numerals as those of the embodiment, and description thereof is omitted herein.

Pneumatic tires of the examples of the present invention and those of the comparison examples are described below.

The pneumatic tires of the examples 1 through 5 and those of the comparison examples 1, 2 had a tire size of 195/65R15, a rim size of 15X6.5-JJ, and an air pressure of 200 kPa. The tire of each of the examples and the comparison examples was mounted on a car of 2000cc. One tester got on the car to evaluate steering stability, the degree of comfortableness in a ride, car radio noise, and vibration.

The conductive rubber members of the pneumatic tires of the examples 1 through 5 and that of the comparison example 2 were formed by molding the same conductive rubber. The same tread rubber was used for the tread part of the pneumatic tires of the examples 1 through 5 and those of the comparison examples 1, 2.

To obtain the conductive rubber, after a composition of each conductive rubber member containing SBR used as its rubber component, zinc oxide, stearic acid, an age resistor, aroma oil, and sulfur in addition to carbon black were kneaded, the composition of each of the examples and the comparison examples was molded in a die to shape each conductive rubber member into a configuration as described later.

To obtain the tread rubber, after a composition of the tread rubber body containing the SBR used as its rubber component, silica, zinc oxide, stearic acid, the age resistor, the aroma oil, and sulfur in addition to 12 mass percentage of carbon black was kneaded, the composition was molded by an extruder.

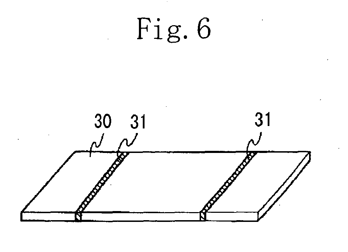

The volume specific resistance of the conductive rubber member and that of the tread rubber were measured by the following method. In the case of the conductive rubber member, a rubber composition was prepared to obtain a vulcanized rubber sheet. A rubber specimen 30 (a=1mm, b=20mm, L=70mm, and total length A≧100mm) shown in Fig. 6 was formed from the rubber sheet. After an insulation tape was bonded to the surface of the rubber specimen 30, conductive paste serving as electrodes 31, 31 was applied to the insulation tape, with the electrodes 31, 31 spaced at a predetermined interval.

After the specimen was allowed to stand at 23±2°C for 48 hours, an electric resistance value R between the electrodes 31, 31 was measured at 23±2°C. Thereafter numerical values were substituted into an equation of Rv=(a×b×R)/L to compute the volume specific resistance.

The volume specific resistance of the tread rubber was also computed by the same method as that used to measure the volume specific resistance of the conductive rubber.

The result was that the volume specific resistance of the conductive rubber used in the examples and the comparison example 2 was 6.0×10⁶ Ω·cm which is smaller than 1.0×10⁸ Ω·cm. The volume specific resistance of the tread rubber was 2.0×10⁹ Ω·cm which is not less than 1.0×10⁸Ω·cm.

Table 1 shows the construction of the tires of the examples 1 through 5 and the comparison examples 1, 2 and the results of evaluation.

**Table 1**

| | Comparison example 1 | Comparison example 2 | Example 1 | Example 2 | Example 3 | Example 4 | Example 5 |
|---|---|---|---|---|---|---|---|
| Configuration of conductive rubber | Not formed | Diameter: 10mm, columnar (does not reach steel belt layer and conductive rubber layer) | Diameter: 5mm,conic | Diameter: 10mm, conic | Diameter: 20mm,conic | Diameter: 10mm, conic | Diameter: 10mm, conic |
| Content (mass percentage) of carbon in conductive rubber | 0 | 30 | 30 | 30 | 30 | 20 | 15 |
| Electric resistance value (Ω) | 1.6×10⁹ | 1.5×10⁹ | 8.0×10⁶ | 6.0×10⁶ | 6.2×10⁶ | 1.2×10⁷ | 8.9×10⁷ |
| Mass (index) | 100 | 100 | 100 | 100 | 101 | 100 | 100 |
| steering controllability | 3 | 3 | 3 | 3 | 3 | 3 | 3 |
| Degree of comfortableness in ride | 3 | 3 | 3 | 3 | 3 | 3 | 3 |
| Car radio noise | Generated | Generated | Not generated | Not generated | Not generated | Not generated | Not generated |
| Vibration | 3 | 2.5 | 3 | 3 | 2.5~3 | 3 | 3 |

### Example 1

The construction of the pneumatic tire of the example 1 was similar to that of the tire of the above-described embodiment. More specifically, after the conductive rubber component was kneaded, it was molded conically in a die to obtain the conductive rubber member. The diameter of a perfect circle of the conductive rubber member exposed on the outer end surface of the tread part was 5mm.

After the rubber component was kneaded, the kneaded rubber component was molded by an extruder to obtain the tread rubber.

The conductive rubber members were wedged into the tread rubber before it was vulcanized and molded, with the conductive rubber members spaced at intervals of 30mm in the axial direction of the tire and at intervals of 50mm in the circumferential direction thereof. Thereafter the tread rubber was heated at 180°C for 10 minutes to vulcanize and mold it.

The electric resistance value of the tread surface including the exposed portion of the conductive rubber member of the formed tire was 8.0×10⁶ Ω when it was measured by a measuring method described below. The mass (index) of the tire of the example 1 was 100, supposing that the mass of the tire of the comparison example 1 which is described later was 100.

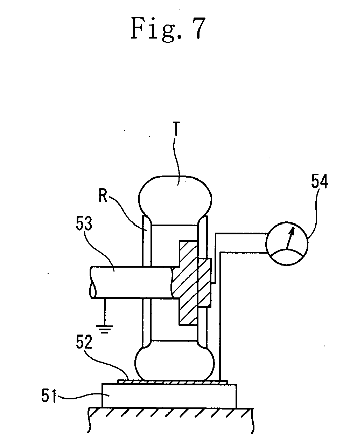

As shown in Fig. 7, the electric resistance value of the tread surface including the exposed portion of the conductive rubber member of the tire was measured in accordance with a JATMA requirement by using a measuring apparatus having an insulation plate 51, a conductive metal plate 52 disposed on the insulation plate 51, a conductive tire-mounting shaft 53 holding a tire T, and an electric resistance-measuring instrument 54.

After a release agent and dirt on the surface of the tire T were removed sufficiently and dried sufficiently, the tire T was mounted on a conductive rim (16×7JJ) made of an aluminum alloy. An internal pressure (200 kPa) and a load (5.3 kN: 80% of maximum loading ability) were applied to the tire T. A test environment temperature (temperature of test room) was set to 25°C. The humidity was set to 50%. The surface of the metal plate 52 was polished smoothly. The electric resistance value of the metal plate 52 was set to not more than 10 Ω. The electric resistance value of the insulation plate 51 was set to not less than 10¹²Ω. The measuring range of the electric resistance-measuring instrument 54 was 1.0×10³ Ω to 1.6×10¹⁶ Ω. The test voltage was applied to obtain the electric resistance value of the tread surface including the exposed portion of the conductive rubber member of the tire at not less than 100 V nor more than 1000V.

The test is conducted in the following procedure.
(1) The rim is mounted on the tire T after the release agent and dirt are removed sufficiently and the tire T is dried sufficiently by using a soap solution.
(2) After the tire T is allowed to stand in the test room for two hours, the tire T is mounted on the tire-mounting shaft 53.
(3) A warming-up work of applying a load is performed. More specifically, the load was applied to the tire T for 0.5 minutes. After the load was removed from the tire T, the load was applied to the tire T for 0.5 minutes again. After the load was removed from the tire T, the load was applied to the tire T for two minutes again.
(4) Thereafter the voltage was applied to the tire-mounting shaft 53 at not less than 100 V nor more than 1000V. After elapse of five minutes, the electric resistance value of the tread surface including the exposed portion of the conductive rubber member of the tire was measured by the electric resistance-measuring instrument 54 interposed between tire-mounting shaft 53 and said conductive metal plate 52.

### EXAMPLE 2

The exposed surface of the conductive rubber member disposed on the tread part was formed as a perfect circle having a diameter of 10mm. The inner end of the conductive rubber member in the radial direction of the tire was brought into contact with the steel belt layer. The conductive rubber member contained 30 mass percentage of carbon.

The electric resistance value of the surface of the tread part including the exposed portion of the conductive rubber member of the formed tire was 6.0×10⁶ Ω. The mass (index) of the tire of the example 2 was 100, supposing that the mass of the tire of the comparison example 1 which is described later was 100.

### EXAMPLE 3

The exposed surface of the conductive rubber member disposed on the tread part was formed as a perfect circle having a diameter of 20mm. The inner end of the conductive rubber member in the radial direction of the tire was brought into contact with the steel belt layer. The conductive rubber member contained 30 mass percentage of carbon.

The electric resistance value of the surface of the tread part including the exposed portion of the conductive rubber member of the formed tire was 6.2×10⁶ Ω. The mass (index) of the tire of the example 3 was 101, supposing that the mass of the tire of the comparison example 1 which is described later was 100.

### EXAMPLE 4

The exposed surface of the conductive rubber member disposed on the tread part was formed as a perfect circle having a diameter of 10mm. The inner end of the conductive rubber member in the radial direction of the tire was brought into contact with the steel belt layer. The conductive rubber member contained 20 mass percentage of carbon.

The electric resistance value of the surface of the tread part including the exposed portion of the conductive rubber member of the formed tire was 1.2×10⁷ Ω. The mass (index) of the tire of the example 4 was 100, supposing that the mass of the tire of the comparison example 1 which is described later was 100.

### EXAMPLE 5

The exposed surface of the conductive rubber member disposed on the tread part was formed as a perfect circle having a diameter of 10mm. The inner end of the conductive rubber member in the radial direction of the tire was brought into contact with the steel belt layer. The conductive rubber member contained 15 mass percentage of carbon.

The electric resistance value of the surface of the tread part including the exposed portion of the conductive rubber member of the formed tire was 8.9×10⁷ Ω. The mass (index) of the tire of the example 5 was 100, supposing that the mass of the tire of the comparison example 1 which is described later was 100.

### COMPARISON EXAMPLE 1

The tire of the comparison example 1 was not provided with the conductive rubber member. The electric resistance value of the surface of the tread part of the tire was 1.6×10⁹ Ω.

### COMPARISON EXAMPLE 2

The same conductive rubber member as that of the example 2 was used. The inner end of the conductive rubber member in the radial direction of the tire was not brought into contact with the conductive rubber layer and the steel belt layer.

The electric resistance value of the surface of the tread part including the exposed portion of the conductive rubber member of the formed tire was 1.5×10⁹ Ω. The mass (index) of the tire of the comparison example 2 was 100, supposing that the mass of the tire of the comparison example 1 which is described later was 100.

The steering stability, the degree of comfortableness in a ride, the car radio noise, and vibration were evaluated by mounting the tire of each of the examples and the comparison examples on the car body.

The steering stability, the degree of comfortableness in a ride, and the vibration were evaluated at five stages. Tires which had larger marks were superior to those which had smaller marks. The car radio noise was evaluated based on whether the car radio noise generated noise.

As shown in table 1, in the tires of the examples 1 through 3 in which one end of the conductive rubber member was exposed on the tread surface, and the other end thereof was brought into contact with the steel belt layer, it was confirmed that by reducing the electric resistance, the static electricity in the car body was discharged and thereby the generation of a radio noise could be prevented.

On the other hand, in the tire of the comparison example 1 not provided with the conductive rubber member and the tire of the comparison example 2 provided with the conductive rubber member which was not brought into contact with the steel belt layer nor the conductive rubber layer, the electric resistance did not drop and hence the car radio generated noise.

It has been confirmed that the conductive rubber member mounted on the tread rubber body does not adversely affect the mass of the tire, the steering stability, the degree of comfortableness in a ride, and the vibration of the tire. It has been also confirmed that the electric resistance of the conductive rubber member when the diameter of the exposed surface thereof is 20mm is little different from the electric resistance thereof when the diameter of the exposed surface thereof is 10mm. When the conductive rubber member having the diameter of 20mm at the exposed surface thereof was pressed into the tread part, the tread part had a low degree of accuracy in the uniformity of the gauge thereof. As a result, a nonuniformity-caused vibration was observed.

## Claims

1. A pneumatic tire in which a plurality of conductive rubber members each having an electric resistance value lower than that of a tread rubber body is embedded in said tread rubber body in a radial direction of said pneumatic tire from a peripheral surface of said tread rubber body at predetermined intervals in a circumferential direction of said pneumatic tire; an outer end surface of each of said conductive rubber members in the radial direction of said pneumatic tire is exposed on a peripheral surface of a tread part; an inner end of each of said conductive rubber members in the radial direction of said pneumatic tire is brought into contact with a belt formed at an inward position of said tread part in said radial direction of said pneumatic tire or with a conductive rubber layer formed between said tread rubber body and said belt; and the conductive rubber members are so shaped that said conductive rubber members can be wedged into said tread rubber body from said peripheral surface thereof.

2. The pneumatic tire according to claim 1, wherein each of said conductive rubber members is conic so that a sectional area of each of said conductive rubber members becomes gradually smaller from said outer end thereof disposed on said peripheral surface of said tread rubber body to said inner end thereof; and a diameter of said outer end surface of said conductive rubber members exposed on a tread surface is set to not more than 10mm.

3. The pneumatic tire according to claim 1 or 2, wherein a volume specific resistance of said tread rubber body is set to not less than 1.0×10⁸ Ω·cm; and a volume specific resistance of each of said conductive rubber members is set to less than 1.0×10⁸ Ω·cm; and said conductive rubber member contains a rubber component to which a conductive agent composed of an electronic conductive agent consisting of carbon or a conductive filler or/and an ionic conductive agent is added.

4. The pneumatic tire according to any one of claims 1 through 3, wherein said tread rubber body and said conductive rubber member contain carbon; and
said conductive rubber member contains said carbon at a higher mass percentage than said tread rubber body; and said conductive rubber member contains said carbon at not less than 15 mass percentage nor more than 30 mass percentage.

5. The pneumatic tire according to claim 4, wherein said tread rubber body contains said carbon at not more than 15 mass percentage.

6. The pneumatic tire according to any one of claims 1 through 5, wherein a radial outer end surface of at least one of said conductive rubber members is exposed in regions, sandwiching an equator of said pneumatic tire, which contact a road surface.

7. The pneumatic tire according to any one of claims 1 through 6, wherein a rim is mounted on said pneumatic tire to which an internal pressure of 200 kPa is applied; said pneumatic tire is mounted on a conductive tire-mounting shaft; a conductive metal plate is brought into contact with a surface of a tread part on which said conductive rubber members are exposed; and an electric resistance-measuring instrument is interposed between said tire-mounting shaft and said conductive metal plate; and a voltage is applied to said tire-mounting shaft to obtain an electric resistance value of said pneumatic tire of 1.0×10⁶ Ω to 1.0×10⁸ Ω when said electric resistance value thereof is measured in accordance with a JATMA requirement.

8. A method of manufacturing a pneumatic tire according to any one of claims 1 through 7, wherein a conductive rubber member is wedged into a tread rubber body from a peripheral surface thereof before a vulcanizing step is performed, and thereafter said tread rubber body is vulcanized.
